# EUROPEAN PATENT SPECIFICATION

(11) **EP 1 662 882 B1**
(45) Date of publication and mention of the grant of the patent: **18.01.2017**
(21) Application number: 04764535.3
(22) Date of filing: 26.08.2004
(51) Int. Cl.: A21D 2/18, A21D 2/36, A21D 10/00

(54) **HIGH-FIBRE BREAD AND BREAD IMPROVER COMPOSITIONS**
FASERREICHES BROT UND ZUSAMMENSETZUNGEN ZUR BROTVERBESSERUNG
PAIN À HAUTE TENEUR EN FIBRES ET COMPOSITIONS D'AMÉLIORATION DU PAIN

(30) Priority: 10.09.2003 EP 03077878
(43) Date of publication of application: 07.06.2006
(73) Proprietor: Unilever N.V., 3013 AL Rotterdam (NL); Unilever BCS Europe B.V., 3013 AL Rotterdam (NL); Unilever BCS Limited, London, EC4Y 0DY (GB)
(72) Inventor: DE MAN, Marinus, Unilever R & D Vlaardingen, NL-3133 AT Vlaardingen (NL); WEEGELS, Peter, Louis, Unilever R & D Vlaardingen, NL-3133 AT Vlaardingen (NL)
(74) Representative: Wurfbain, Gilles L.
(86) International application number: PCT/EP2004/009561
(87) International publication number: WO 2005/023007

(56) References cited:
- FR-A- 2 736 802
- GB-A- 1 538 360
- US-A- 3 676 150
- US-A- 4 311 717
- US-A- 4 451 491
- US-A- 4 481 222
- US-A- 5 527 556
- US-A1- 2003 134 023
- DATABASE EPODOC EUROPEAN PATENT OFFICE, THE HAGUE, NL; 29 August 2003 (2003-08-29), "Improving composition of the "superfort" type for bread and bakery products" XP002270386 & RO 118 620 B (GIUREA ALIN MADALIN; RADUCAN ION (RO)) 29 August 2003 (2003-08-29)

## Description

### Technical Field

This invention relates to the field of bakery products. More in particular, the invention relates to high-fibre bread and bread improver compositions suitable for inclusion in mixes for baking high-fibre bread and imparting desirable product quality onto the finished bread.

### Background of the invention

Bread is consumed by millions of people every day as an important part of their daily food intake. The nutritional quality of wholemeal bread is well known and generally appreciated. Unfortunately, wholemeal bread has a tendency to stale quickly and to lose its desirable texture and flavour qualities that are associated with freshness. Moreover, some consumers do not appreciate the dark colour of wholemeal bread. Other consumers strongly prefer the taste of white bread over other types of bread, when in combination with certain sweet food products such as honey or chocolate. The lower nutritional value of white bread is thereby taken for granted.

Various techniques have been developed to increase the length of the shelf life of baked products, especially bread. For example, it has been proposed to delay the staling process by finishing the bread closer to the moment of consumption by employing bake-off. Furthermore, preservatives have been included in the dough mix and compounds have been proposed to reduce the oxygen content of the packaging to make the part-baked dough suitable for bake-off after chilled or frozen storage.

Other techniques that have been developed are the addition of emulsifiers or additives, such as enzymes or mixtures of enzymes. For example, bacterial amylases or maltogenic amylases may be added to bread dough as anti-staling agents. Compositions comprising such additives are generally referred to as bread improver compositions.

Other examples of compositions for improving the quality of bread and other bakers' goods, both leavened and unleavened baked products, include emulsifiers, antioxidants, sugars, food acids and acidity regulators, milk solids and vitamins. Such bread improver compositions may be accompanied by a proportion of flour to facilitate admixture with remaining bakery ingredients consisting largely of flour. Fats and/or liquid glyceride oils may also be present. For ease of dispensing into the baking mix, quite a lot of sugar may be present, according to the recipe followed.

Each of these approaches has its own particular disadvantages and limitations. The main aim of the present invention is to provide white and brown bread having at least the same nutritional quality in terms of the most important bread nutrients (fibre, iron, thiamin, niacin, vitamin B6) as regular wholemeal bread and having a comparable product quality (in terms of crumb structure, softness of the crumb and staling) as regular white and brown bread, preferably by using natural ingredients. Moreover, the processing properties of the dough and the technical product quality, such as volume and appearance, should be acceptable.

In addition, the following technical requirements may also be formulated:
1. Easy Processable (line performance)
2. Adequate product properties (baking properties)
3. Palatable/quality: soft, fresh, reduced staling
4. Low flatulence in case of fibre addition, especially inulin
5. Complying with nutritional claims, high fibre content
6. Good colour properties, especially for white type of bread.

It has now been surprisingly found that the above requirements and other objects of the invention could be achieved by the high-fibre bread according to the invention, which comprises 0.3 to 20% by weight of a combination of carboxymethylcellulose and at least one other type of fibre material to improve softness of the crumb and provide prolonged softness in time. Although bread products comprising carboxymethylcellulose have been disclosed, for instance in GB-A-592 011, they were found not to comply with all these requirements.

### Definition of the Invention

According to a first aspect, there is provided a high-fibre bread comprising 0.3 to 20% by weight of a combination of carboxymethylcellulose and at least one other type of fibre material, wherein said other fibre material comprises inulin.

According to a second aspect, there is provided a dough for preparing a bread according to claim 8 and according to a third aspect, there is provided a process for producing a high-fibre bread according to claim 9.

### Detailed Description of the Invention

As stated above, it is well known that wholemeal bread contains more nutritionally important components than white or brown bread (e.g. dietary fibre, vitamins, minerals). Unfortunately, it tends to stale faster than normal bread, and also its volume tends to be reduced, which negatively affects its eating quality. According to the present invention, a compromise was found between wholesomeness, nutritional value and palatability. In principle, the following options exist to improve the nutritional quality of bread:
1. Mineral addition
2. Vitamin addition
3. Fibre addition

The first two options normally do not pose any major problems. However, it was found that when the third option is applied, the eating quality of white or brown bread is deteriorated in a similar or faster way as in wholemeal bread. Surprisingly, both the texture/softness and the fresh-keeping could be improved by a specific combination of carboxymethylcellulose and at least one other type of (preferably white) fibres, optionally in combination with other bread improver ingredients such emulsifiers or fresh-keeping amylases. The results are summarised in the following Table:

| | Wholemeal | Inulin | Cellulose | Inulin/ Cellulose | Current invention |
|---|---|---|---|---|---|
| Processability | ++ | - | + | + | + |
| Product quality | +/- | +/- | - | +/- | + |
| Softness | - | + | - | +/- | + |
| Freshness in time | -- | + | - | +/- | + |
| Flatulence | 0 | - | 0 | +/- | 0 |
| Nutritional properties | + | + | + | + | + |
| Colour | - | + | + | + | + |

It follows from the Table that the use of inulin alone in high dosages gives rise to wild baking bread and will cause flatulence upon digestion. Cellulose fibers alone enhance staling of bread.

The current invention uses the optimal combination fibres, i.e. carboxymethylcellulose in combination with at least one other type of fibre, wherein said other fibre material comprises inulin, preferably inulin and cellulose, (optionally supplemented with pectin, bran, B-glucan, etc.), optionally together with emulsifiers or fresh-keeping amylases to improve softness of the crumb and provide prolonged softness in time.

The source of these other fibres can be as follows:
* inulin: fibre from Chicory, sugar beet or alike
* modified cellulose gum, like carboxymethyl-cellulose or hydroxypropyl-cellulose
* cellulose fibre: wheat fibre, pea fibre, sugar beet fibre, oat fibre, etc., bran from wheat, oat, rice, etc.

All these fibres are mainly insoluble. Other types of fibres include resistant starch, guar gum, xanthan gum, gum arabic, etc.

The total amount of fibres in the bread is from 0.3 to 20% by weight of the bread, preferably from 2.5 to 15%, more preferably from 4.0 to 10%.

The bread according to the present invention can be manufactured in an industrial baking process, which bread satisfies the requirements formulated earlier above:
1. Easy Processable (line performance)
2. Adequate product properties (baking properties)
3. Palatable/quality: soft, fresh, reduced staling
4. Low flatulence in spite of fibre addition
5. Complying with nutritional claims, high fibre content
6. Good colour properties, especially for white type of bread.

In the industrial bread manufacturing process, a bread dough is prepared by adding a bread improver composition incorporating fibres, enzymes, etc. to flour, by simply mixing before or after kneading the ingredients to from a dough.

In the following Table, the preferred dosages and dosage ranges of the fibres are given as percentage by weight, based on the weight of the bread dough in which they are used.

| | |
|---|---|
| Carboxymethylcellullose | 0.6% (0.2-1.0) |
| Inulin | 2.5% (1.0-3.5) |
| Beet fibre | (0.5-1.5) |
| Pea fibre | (0.5-3.5) |
| Wheat fibre | 2.3% (0.5-3.5) |
| rice bran | (0.5-1.5) |

The bread according to the invention can have any suitable shape and basic recipe, however, loaf breads, buns, French sticks, are preferred.

According to second aspect of the invention, there is provided a dough for preparing a bread according to claims 1-7, prepared by mixing 45-70 wt.% of flour, 45-20% wt.% water, up to 10 wt.% leavening agent and 2-30% of a bread improver composition comprising 50 to 95% of a combination of carboxymethylcellulose and at least one other type of fibre material wherein said other fibre material comprises inulin, more preferably inulin and cellulose. The amounts of fibres in the bread improver composition are chosen to be such that, when the bread improver composition is mixed with the flour, suitable end levels of the fibres are achieved in the bread.

According to a third aspect, there is provided a process for producing a high-fibre bread according to any of claims 1-7. The process for preparing bread according to the invention comprises the following steps:
mixing and kneading the ingredients, moulding, proofing, forming, allowing to rest, optionally pricking and cutting, decorating, proofing, pre-baking, cooling, blast-freezing, optionally portioning, packaging and storing, baking. WO-A-95/23515 relates to improving the properties of a dough or a baked product by adding an enzyme preparation comprising xylanase and amylase to the dough. It is stated that baked products of increased volume and improved softness, including improved crumb softness upon storage were obtained.

The dough used for making the bread of the invention may comprise 0.1 to 1.0% of an emulsifier selected from the group of diacetyl tartaric acid ester of glycerides (DATA), monoglycerides (DATEM), calcium or sodium stearoyl lactylate and an effective amount of an enzyme blend comprising amylase and xylanase. Preferred amounts of DATA and/or DATEM are 0.05 to 0.5%, most preferred are 0.1 to 0.3%.

Other emulsifiers known in the art may be added in addition to DATEM and/or DATA. Examples of such emulsifiers are mono- or diglycerides, polyoxyethylene stearates, sugar esters of fatty acids, polyglycerol esters of fatty acids, lactic acid esters of monoglycerides, acetic acid esters of monoglycerides, lecithin or phospholipids.

The enzymes used in dough compositions in accordance with the present invention are amylase and xylanase, preferably in a weight ratio of amylase to xylanase of 1 to 2, up to 10 to 1 of the pure enzymes. A more preferred weight ratio of amylase to xylanase is 1 to 1 up to 4 to 1 of the pure enzyme.

The enzymes used in accordance to the invention are used in an effective amount. These amounts can be determined by the skilled person and will generally be dependent on the type of enzymes and the concentration/activity of the enzymes in the dough composition. More preferred, a suitable amount will be 0.001 to 0.8% of a combination of amylase and xylanase. Preferred amounts are 0.002-0.05% xylanase and 0.002-0.05% amylase. Most preferred amounts are 0.005 to 0.025% xylanase and 0.005 to 0.035% amylase.

The amylases used according to the invention can one or more α-amylases and/or maltogenic amylase and/or β-amylase or combinations thereof. Examples of fresh-keeping amylases for the bakery industry are Novamyl™ (ex Novozymes) and Maxlife™ (ex Danisco).

In accordance with established practise in the baking art, one or more further enzymes may also be added to the flour or to the dough. Examples of such enzymes are pentosanase, hemicellulase or proteases.

Dough according to the invention will generally also comprise flour, water and optionally one or more leavening agents. Examples of suitable flour are whole meal, wheat flour, rye/ wheat mixtures, high gluten flour or combinations thereof. Suitable leavening agents are, for example, yeast, baking powder, sodium carbonate, sodium hydrogen carbonate. The amount and ratio of flour, water and leavening agent will be determined by the person skilled in the art depending on the type of dough or bread is to be prepared. A typical dough according to the invention comprises 45-70 wt.% of flour, 45-20 wt.% water and up to 10 wt.% leavening agent.

In accordance with established practise in the baking art, the dough may optionally comprise one or more further components selected from the group of seeds, nuts, dried raisins, sultanas, milk powder, minerals, vitamins, gluten, granulated fat, anti-oxidants (e.g. ascorbic acid, potassium bromate, potassium iodate, ammonium persulfate), amino acids (e.g. cysteine), salt (e.g. sodium chloride, calcium acetate, sodium sulfate, calcium sulfate, calcium carbonate, sodium carbonate, sodium hydrogen carbonate), sugar, colourants, preservatives, and flavours, iron and zinc salts.

In order to prepare bread, a dough according to the invention is prepared for example by first mixing and kneading the ingredients. The process for the preparation of a high-fibre bread according to the invention comprises the following steps: mixing and kneading the ingredients, moulding, proofing, forming, allowing to rest, optionally pricking and cutting, decorating, proofing, pre-baking, cooling, blast-freezing, optionally portioning, packaging and storing, baking.

Preferably, the kneading process lasts at least 5 minutes. The dough is then preferably proofed, formed, allowed to rest, optionally pricked and cut, proofed, pre-baked, cooled, blast frozen, and baked. After the blast-freezing step the dough may be portioned, packed and stored.

Any suitable packing forms and packing material may be used such as for example flow wraps, cardboard, paper or plastic wrappers or foils.

The bread prepared with the bread improver composition can be stored at ambient temperature, chilled or frozen. The bread is preferably stored frozen for optimal shelf life. If required, the bread can be baked-off shortly before consumption.

The bread improving composition may be added to the dough before proofing or baking steps are carried out. It is preferred that the bread improver is added such that the final dough comprises 0.001 to 0.8% amylase and xylanase and 0.05 to 0.5% emulsifier, preferably 0.1-0.3% emulsifier. Preferably the improver is added such that the final dough comprises, 0.002-0.05% xylanase and 0.002-0.05% amylase, most preferably comprising 0.005 to 0.025% xylanase and 0.005 to 0.035% amylase.

Unless otherwise stated percentages abbreviated with "wt%" are meant to refer to weight percentages. Percentages abbreviated with "%" are meant to refer to weight percentages based on the amount of flour used unless stated otherwise.

The invention will now de further explained by means of the following non-limiting examples.

### EXAMPLE 1

To prove the effectivity of the invention, breads were made with various fibre combinations, as indicated in the recipes in the Table 1 below. Also shown are the effects on crumb firmness, staling rates and baking performance.

| | White 1 | White 2 | White 3 | White 4 | White 5 | White 6 | Normal white |
|---|---|---|---|---|---|---|---|
| Composition: | | | | | | | |
| Flour | 100 | 100 | 100 | 100 | 100 | 100 | 100 |
| Yeast | 2 | 2 | 2 | 2 | 2 | 2 | 2 |
| Salt | 2 | 2 | 2 | 2 | 2 | 2 | 2 |
| Dextrose | 0.625 | 0.625 | 0.625 | 0.625 | 0.625 | 0.625 | 0.625 |
| CSL | 0.25 | 0.25 | 0.25 | 0.25 | 0.25 | 0.25 | 0.25 |
| Water | 64 | 60 | 62 | 65 | 57 | 63 | 57 |
| Vitamin C | 0.005 | 0.005 | 0.005 | 0.005 | 0.005 | 0.005 | 0.005 |
| Biobake Pconc | 0.002 | 0.002 | 0.002 | 0.002 | 0.002 | 0.002 | 0.002 |
| Maxlife 45 | 0.02 | 0.02 | 0.02 | 0.02 | 0.02 | 0.02 | 0.02 |
| Biobake 710 | 0.01 | 0.01 | 0.01 | 0.01 | 0.01 | 0.01 | 0.01 |
| Gluten | 2 | 2 | 2 | 2 | 2 | 2 | 2 |
| CMC (aquasorb) | 1 | | 1 | 1 | | | |
| Inulin (Raftilose HP) | 4 | 4.5 | 6.8 | | 7.8 | | |
| Wheat fibre (vitacel) | 2.8 | 3.3 | | 6.8 | | 7.8 | |
| Firmness index (%)¹ | 95% | 123% | 63% | 88% | 127% | 110% | 100% |
| Staling rate index (%)¹ | 108% | 125% | 101% | 97% | 95% | 120% | 100% |
| Volume index (%)¹ | 116% | 117% | 133% | 115% | 130% | 101% | 100% |

| | | | | | | | |
|---|---|---|---|---|---|---|---|
| ¹as indexed on normal white | | | | | | | |

The firmness of the crumb was measured by texture profile analysis (c.f. AACC analytical method 74-09) at 1, 2 and 5 days after baking and storage at 20°C. The firmness of the bread, extrapolated at 0 days of storage and the staling rate were calculated.

The results show that only the bread with CMC and one other type of fibre material (white 1, 3 and 4) gave equal or better results in comparison with the normal white bread (without fibre addition) in terms of firmness at 0 days storage and in staling rate in combination with a normal baking behaviour. The bread enriched with inulin gave better results, but it did cause slightly wild baking. Choosing proper baking conditions can compensate the latter. In addition, too high inulin intake may cause flatulence.

### EXAMPLE 2

Other examples of bread are provided in Table 2:

**Table 2 - Bread recipes for white and brown bread with various fibre sources and their effect on crumb firmness and staling rates**

| | White 7 | White 8 | Brown 1 | Brown 2 | Brown 3 |
|---|---|---|---|---|---|
| Flour | 2000 | 2000 | 1400 | 1400 | 1400 |
| Wholemeal | | | 600 | 600 | 600 |
| Yeast | 40 | 40 | 40 | 40 | 40 |
| Salt | 40 | 40 | 40 | 40 | 40 |
| Sugar | 20 | 20 | 20 | 20 | 20 |
| Fat | 20 | 20 | 20 | 20 | 20 |
| Water | 1220 | 1220 | 1300 | 1220 | 1220 |
| Vitamin C | 0.10 | 0.10 | 0.10 | 0.10 | 0.10 |
| Biobake Pconc | 0.04 | 0.04 | 0.04 | 0.04 | 0.04 |
| Maxlife 45 | 0.4 | 0.4 | 0.4 | 0.4 | 0.4 |
| Biobake 710 | 0.2 | 0.2 | 0.2 | 0.2 | 0.2 |
| Gluten | 40 | 40 | 40 | 40 | 40 |
| Carboxy methyl cellulose (Aquasorb) | 20 | 20 | 20 | 20 | 20 |
| Inulin (Raftilose HP) | 80 | 80 | 46 | 80 | 80 |
| Pea fibre (Swelite) | | 164 | | 20 | |
| soya grit | | | 124 | | |
| Vitacel | 76 | | | | 9 |
| Wheat germ | | | 16 | | |
| rice bran | | | 82 | | |
| Firmness index (%)¹ | 100 | 125 | 110 | 134 | 100 |
| Staling rate index (%)¹ | 100 | 106 | 108 | 119 | 100 |

| | | | | | |
|---|---|---|---|---|---|
| ¹as indexed on white 7 or brown 3 | | | | | |

It can be seen that replacing cellulose fibre by other fibre materials (pea fibre, soya grits plus rice bran) that do not contain sufficient amounts of cellulose, increased the firmness of the bread and speeded up the staling rate.

### EXAMPLE 3

Breads were baked using various sources of fibre and compared with fresh commercial bread from the artisinal baker. The results are given below:

**Table 3 - Bread recipes for white and brown bread with various fibre sources and their effect on crumb firmness and staling rates; comparison with artisinal white, brown and wholemeal bread**

| | Artisinal White² | Artisinal Brown² | Artisinal Wholemeal² | White 9 | White 10 | White 11 | Brown 4 | Brown 5 | Brown 6 |
|---|---|---|---|---|---|---|---|---|---|
| Flour | | | | 2000 | 2000 | 2000 | 1400 | 1400 | 1400 |
| Wholemeal | | | | | | | 600 | 600 | 600 |
| Yeast | | | | 40 | 40 | 40 | 40 | 40 | 40 |
| Salt | | | | 40 | 40 | 40 | 40 | 40 | 40 |
| Sugar | | | | 20 | 20 | 20 | 20 | 20 | 20 |
| Fat | | | | 20 | 20 | 20 | 20 | 20 | 20 |
| Water | | | | 1220 | 1220 | 1220 | 1300 | 1300 | 1300 |
| vitamin C | | | | 0.1 | 0.1 | 0.1 | 0.1 | 0.1 | 0.1 |
| Biobake Pconc | | | | 0.04 | 0.04 | 0.04 | 0.04 | 0.04 | 0.04 |
| Maxlife 45 | | | | 0.4 | 0.4 | 0.4 | 0.4 | 0.4 | 0.4 |
| Gluten | | | | 0 | 0 | 0 | 40 | 40 | 40 |
| Carboxy methyl cellulose (Aquasorb) | | | | 20 | 0 | 0 | 0 | 20 | 0 |
| Inulin (Raftilose HP) | | | | 127 | 127 | 127 | 83 | 83 | 83 |
| Arabino-xylan (Xylogold) | | | | | | 20 | | | 20 |
| soya grit | | | | | | | 149 | 149 | 149 |
| wheat germ | | | | | | | 33.4 | 33.4 | 33.4 |
| rice bran | | | | | | | 117 | 117 | 117 |
| Skimmed milkpowder | | | | 40 | 40 | 40 | | | |
| Firmness index (%)¹ | 102 | 71 | 135 | 100 | 136 | 146 | 131 | 100 | 115 |
| Staling rate index (%)¹ | 134 | 106 | 188 | 100 | 133 | 121 | 113 | 100 | 116 |

| | | | | | | | | | |
|---|---|---|---|---|---|---|---|---|---|
| ¹as indexed on white 9 or brown 5 ²recipe unknown | | | | | | | | | |

The results in Table 3 confirm that the use of CMC in combination with inulin is beneficial for the bread firmness and the staling rate. Despite the higher fibre content of the white bread 9, this combination of fibres has even a lower staling rate then the commercial white bread. Despite the presence of fibrous materials in the brown bread, the staling rate is only slightly decreased compared with the commercial brown bread. Most importantly, although the fibre content of the brown and white bread are equal to the wholemeal bread, both the firmness and the staling rate of the white and brown bread are greatly reduced when compared with the firmness and staling rate of the wholemeal bread.

### EXAMPLE 4

Breads were baked using the following recipes:

| | White | Brown |
|---|---|---|
| Flour | 100.0 | 80.0 |
| Wholemeal | 0.0 | 20.0 |
| Yeast | 2.0 | 2.0 |
| Salt | 2.0 | 2.0 |
| Sugar | 1.0 | 1.0 |
| Fat | 2.0 | 2.0 |
| Water | 60.5 | 65.0 |
| vitamin C | 0.005 | 0.005 |
| Biobake Pconc | 0.002 | 0.002 |
| Maxlife 45 | 0.020 | 0.020 |
| Biobake 710 | 0.010 | 0.010 |
| Gluten | 2.0 | 2.0 |
| Carboxy methyl cellulose (Aquasorb) | 1.0 | 1.0 |
| Inulin (Raftilose HP) | 3.0 | 2.3 |
| Beet fibre (Fibrex) | 1.0 | |
| soya grit | 0.0 | 6.2 |
| wheat germ | 0.0 | 0.8 |
| rice bran | 2.0 | 4.1 |
| Skimmed milkpowder | 2.0 | 0.0 |

In the recipe for the brown bread, use was made of the fibre materials rice bran, wheat germ and soya grit. The advantage of using these raw materials is that a brown bread is made containing the same or larger amount of the minerals (Fe and Zn) and vitamins (Vitamin B1, B3 and B6) as a wholemeal bread. In a normal diet wholemeal bread contributes in relevant amounts to the daily intake of these vitamins and minerals. The white bread may optionally be fortified or restored with mineral and vitamin preparations. On an industrial scale (100 kg flour batches) the doughs could be processed without problems during dividing, proofing and moulding (no stickiness; normal dough properties). During baking the doughs showed no wild oven spring as was observed when only inulin was used as a source of fibres.

After storage of one day at ambient temperature the breads were delivered to consumers (n=57) who were asked to compare the breads with commercial industrially produced benchmarks of brown and white breads baked the night before. After one further day, the consumers had to score them on a 100-point scale on a.o. soddenness, firmness and dryness of the mouthfeel. To follow staling of the bread in time, they were scored at 4 days after production (i.e. equivalent to 1 and 3 days after purchase, respectively).

| Brown bread | invention 2d | invention 4d | benchmark 2d | benchmark 4d |
|---|---|---|---|---|
| **Firmness** | **51** | **48** | **54** | **53** |
| Sodden | 38 | 37 | 40 | 36 |
| **Dry mouthfeel** | **34** | **38** | **39** | **45** |
| | | | | |

| White | | | | |
|---|---|---|---|---|
| **Firmness** | **43** | **45** | **53** | **57** |
| **Sodden** | **38** | **34** | **43** | **36** |
| **Dry mouthfeel** | **30** | **36** | **35** | **45** |

| | | | | |
|---|---|---|---|---|
| Figures in bold indicate a significant difference between invention and benchmark (P<0.05) | | | | |

Both breads scored significantly lower on firmness and dry mouthfeel, also after 4 days of ambient storage. In addition, the white bread was perceived less sodden (figures in bold at significance of p<0.05). Overall it can be seen that the staling process in the breads according to the invention was slower than in the white and brown benchmarks, i.e. the scores increased less.

## Claims

1. High-fibre bread comprising 0.3 to 20% by weight of a combination of carboxymethylcellulose and at least one other type of fibre material, wherein said other fibre material comprises inulin.

2. Bread according to claim 1, comprising 2.5 to 15%, preferably 4.0 to 10% of said combination of fibre materials.

3. Bread according to any preceding claim, wherein said other fibre material comprises inulin and cellulose.

4. Bread according to any preceding claim, supplemented with pectin, bran, and/or B-glucan.

5. Bread according to any preceding claim, comprising 0.001 to 5.0% of bakery fats, emulsifiers or enzymes.

6. Bread according to claim 5, comprising 0.1 to 1.0% of an emulsifier selected from the group of diacetyl tartaric acid ester of glycerides (DATA), monoglycerides (DATEM), calcium or sodium stearoyl lactylate.

7. Bread according to claim 6, comprising one or more fresh-keeping amylases and xylanase in a weight ratio of 1 to 2 up to 10 to 1 of pure enzyme.

8. Dough for preparing a bread according to claims 1-7, prepared by mixing 45-70 wt.% of flour, 45-20 wt.% water, up to 10 wt.% leavening agent and 2-30 wt.% of a bread improver composition comprising 50 to 95% of a combination of carboxymethylcellulose and at least one other type of fibre material, wherein said other fibre material comprises inulin.

9. Process for the preparation of a high-fibre bread according to any one of Claims 1-7, which comprises the following steps:
mixing and kneading the ingredients, moulding, proofing, forming, allowing to rest,
optionally pricking and cutting, decorating, proofing, pre-baking, cooling, blast-freezing, optionally portioning, packaging and storing, baking.

## Patentansprüche

1. Faserreiches Brot, umfassend 0,3 bis 20 Gewichts.-% einer Kombination von Carboxymethylcellulose und mindestens einer anderen Art von Fasermaterial, wobei dieses andere Fasermaterial Inulin enthält.

2. Brot nach Anspruch 1, umfassend 2,5 bis 15%, vorzugsweise 4,0 bis 10% der Kombination von Fasermaterialien.

3. Brot nach einem der vorhergehenden Ansprüche, wobei das andere Fasermaterial Inulin und Cellulose umfasst.

4. Brot nach einem der vorhergehenden Ansprüche, das zusätzlich Pektin, Kleie und/oder B-Glucan enthält.

5. Brot nach einem der vorhergehenden Ansprüche, das 0,001 bis 5,0% Backfette, Emulgatoren oder Enzyme enthält.

6. Brot nach Anspruch 5, das 0,1 bis 1,0% eines Emulgators ausgewählt aus der Gruppe der Diacetylweinsäureester von Glyceriden (DATA), Monoglyceriden (DATEM), Calcium- oder Natriumstearoyllactylat enthält.

7. Brot nach Anspruch 6, das eine oder mehrere Frische-erhaltende Amylasen und Xylanase in einem Gewichtsverhältnis von 1 zu 2 bis zu 10 zu 1 bezogen auf reines Enzym enthält.

8. Teig zur Herstellung eines Brotes gemäß den Ansprüchen 1-7, der durch Mischen von 45-70 Gew.-% Mehl, 45-20 Gew.-% Wasser, bis zu 10 Gew.-% Treibmittel und 2-30 Gew.-% einer Brotverbesserungszusammensetzung enthaltend 50 bis 95% einer Kombination von Carboxymethylcellulose und mindestens einer anderen Art von Fasermaterial, wobei dieses andere Fasermaterial Inulin enthält, hergestellt ist.

9. Verfahren zur Herstellung eines faserreichen Brots nach einem der Ansprüche 1-7, welches die folgenden Schritte beinhaltet:
Mischen und Kneten der Bestandteile, Ausformen, Gehen-lassen, Formen, Ruhenlassen, gegebenenfalls Einstechen und Schneiden, Dekorieren, Gehen-lassen, Vor-Backen, Kühlen, Schock-Gefrieren, gegebenenfalls Portionieren, Verpacken und Lagern, Backen.

## Revendications

1. Pain à haute teneur en fibres comprenant de 0,3 à 20 % en poids d'une combinaison de carboxyméthylcellulose et d'au moins un autre type de matière fibreuse, dans lequel ladite autre matière fibreuse comprend de l'inuline.

2. Pain selon la revendication 1, comprenant de 2,5 à 15 %, de préférence de 4,0 à 10 % de ladite combinaison de matière fibreuses.

3. Pain selon l'une quelconque des revendications précédentes, dans lequel ladite autre matière fibreuse comprend de l'inuline et de la cellulose.

4. Pain selon l'une quelconque des revendications précédentes, contenant un complément de pectine, de son et/ou de B-glucane.

5. Pain selon l'une quelconque des revendications précédentes, comprenant de 0,001 à 5,0 % de matières grasses de boulangerie, d'émulsifiants ou d'enzymes.

6. Pain selon la revendication 5, comprenant de 0,1 à 1,0 % d'un émulsifiant choisi dans le groupe constitué d'ester d'acide diacétyl-tartrique de glycérides (DATA), de monoglycérides (DATEM), de lactylate de stéaroyle calcique ou sodique.

7. Pain selon la revendication 6, comprenant une ou plusieurs amylases de préservation de la fraîcheur et de la xylanase dans un rapport pondéral de 1 à 2 jusqu'à 10 à 1 d'enzyme pure.

8. Pâte pour la préparation d'un pain selon les revendications 1 à 7, préparée en mélangeant de 45 à 70 % en poids de farine, de 45 à 20 % en poids d'eau, jusqu'à 10 % en poids d'agent levant et de 2 à 30 % en poids d'une composition d'amélioration du pain comprenant de 50 à 95 % d'une combinaison de carboxyméthylcellulose et d'au moins un autre type de matière fibreuse, dans laquelle ladite autre matière fibreuse comprend de l'inuline.

9. Procédé de préparation d'un pain à haute teneur en fibres selon l'une quelconque des revendications 1 à 7, qui comprend les étapes suivantes :
mélange et pétrissage des ingrédients, moulage, levage, mise en forme, repos, facultativement piquage et coupe, décoration, levage, pré-cuisson, refroidissement, congélation par air pulsé, facultativement mise en portions, emballage et stockage, cuisson.
